(19)

Europäisches
Patentamt
European
Patent Office
Office européen
des brevets

(11) **EP 1 843 256 A1**

(12) **EUROPEAN PATENT APPLICATION**

(43) Date of publication:
**10.10.2007 Bulletin 2007/41**

(51) Int Cl.:
*G06F 17/30* (2006.01)      *G06F 17/27* (2006.01)

(21) Application number: **06251870.9**

(22) Date of filing: **03.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **British Telecmmunications public limited campany**
**London**
**EC1A 7AJ (GB)**

(72) Inventor: **The designation of the inventor has not yet been filed**

(74) Representative: **Lloyd, Barry George William et al**
**BT Group Legal**
**Intellectual Property Department**
**PP C5A**
**BT Centre**
**81 Newgate Street**
**London EC1A 7AJ (GB)**

(54) **Ranking of entities associated with stored content**

(57)    Embodiments of the present invention relate to computer-implemented methods and system for ranking named entities that are associated with selected items of content, such as text-based documents (D1-D3), which are stored on the World Wide Web.

In one form a method according to an embodiment of the invention in general involves a computer-implemented procedure for ranking entities that are associated with selected items of content (D1-D3), the method generally comprising selecting items of content from a content repository (s710), applying weightings to at least some of the entities of the selected items (S715), wherein the values of at least some of those weightings are influenced by a so-called context, and ranking the entities according to their applied weightings (S720). According to embodiments of the invention, a context may include a search query, a user interest profile, an ontology, or a combination of any one or more of the foregoing. The use of context aims to provide a more meaningful set of entities to present to a user.

Figure 7

**Description**

Field of the Invention

The present invention relates to methods of and system for ranking entities, and particularly, but not exclusively, named entities that are associated with content in a content repository or collection, for example the World Wide Web.

Background of the Invention

For many years, the growth of the Internet, and even more so of the World Wide Web (Web), has been considerable. The Web provides a wealth of content and information, including text-based documents, images, sound clips, video clips and other kinds of media, the volume of which is growing all the time. While, on the one hand, the Web as an information repository is extremely valuable, and the value clearly increases as more information is added, on the other hand it is becoming more and more difficult to find specific information efficiently using traditional search engine technology. In other words, as the value of the Web rises, due to more information being added, the cost of use associated with a decreased efficiency also rises, which is undesirable.

While the Web is the most well-known and common service on the Internet, it will be appreciated that there are other services, such as Web based Intranets and on-line databases, which are repositories of information that can be accessed and searched, for example, using search engines. Unless specified or the context dictates otherwise, the principles taught herein apply equally to the Web, to these the other services, and even to documents stored in extranets, intranets, local data banks and the like; and references to Web should be taken broadly to cover any other on-line collection of documents.

Typically a search engine is a software process accessible from a Web site (or Intranet site), which runs on a Web server connected into the Internet network. A user (which may be a person or another process) typically interacts with a search engine by downloading from the Web site, to their personal (or client) computer, a standard interface of the search engine. The user interacts with the interface to create and submit a search query, which is typically transmitted as a formatted text string of characters to the search engine. Such queries usually comprise one or more keywords. In response to a search query, the search engine carries out the search and returns to the user, hopefully, useful search results, or 'hits', in the form of a set of hyperlinks pointing to documents on the Web. The hyperlinks are usually accompanied by respective document titles, so that users can more readily identify which documents are likely to be most relevant. In some instances, the document titles themselves are presented as hyperlinks. It is also possible to generate and send a search query text string without using the standard user interface, as long as the string complies with the format expected by the search engine.

Typically, search results are arranged so that documents that are likely to be most relevant occur higher in the list of returned hyperlinks. The arrangement of documents may be based on a simple statistical analysis, for example relating to how many times the keywords used in a query occur in the document; the perception being that there is a correlation between the number of times a keyword is used in a document and the relevance of the document to the search query.

Additionally, some search engines return a 'taster' with each hyperlink. A taster is a relatively small section of text, which is extracted from the document, which, it is perceived, will improve the ability of a user to distinguish between more and less relevant hits.

In order to provide search results, most search engines, or associated automated processes, rely on a significant amount of pre-processing of documents. For example, most known search engines automatically access Web sites, by following hyperlinks, and retrieve documents in order to catalogue them in some way. Cataloguing in this context means that the documents are analysed at least to identify the main keywords contained therein. In addition, analysing may involve identifying a document title, deriving rankings for keywords and extracting taster text. This information, or metadata, about each document is stored in a searchable database of the search engine, and is used to generate the search results.

On receipt of a search query, a search engine presents the query to the database of document metadata in order to generate search results, which are formatted and returned to the user as a results Web page or pages.

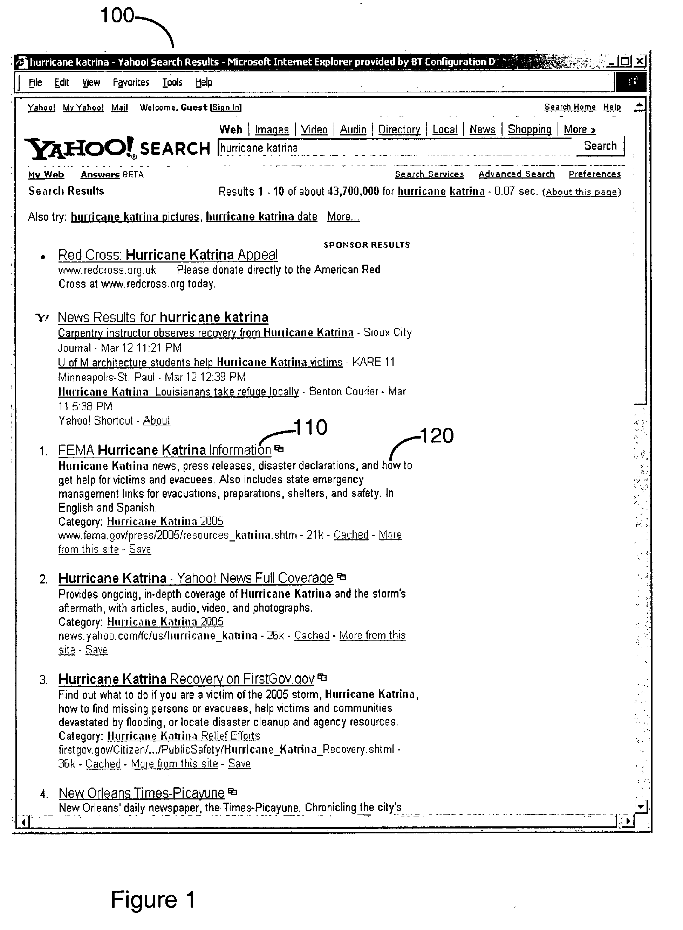

Known search engines in essence attempt to answer user queries by presenting a list of documents to the user. As indicated, the list may be generated using some kind of statistical analysis of the documents and the query. It is then left to the user to read the documents to find the information that they are actually looking for. In practice, often, the information actually required is contained in a result that is not returned in the top set of results and the user has to 'click' through several screens of results in order to find the necessary information. An exemplary results page is shown in the screenshot 100 in Figure 1, where a search for 'Hurricane Katrina' has been made, and over 43 Million hits have been identified. As also shown in Figure 1, each hit (numbered 1 to 4 on the left hand side of the image) is accompanied by a title 110, which acts as the respective hyperlink, and a section of taster text 120.

In recent years, there has been much interest in the notion of the "Semantic Web." The fundamental idea of the semantic web is to associate web-based information with formal ontologies, thus making web-based information much more amenable to machine processing. This is in contrast to the traditional web, where information is rendered primarily for human consumption but without a formal framework for machine processing. For example, on the "traditional" web, it is possible to specify that a given piece of text ("€1000," say) should be displayed in a large bold font; on the Semantic Web, it can be further specified that this text represents the price of Product-37 and link this information to an ontology of products, prices, suppliers, and so on.

An ontology as considered herein is a formal specification of a conceptualisation of a knowledge domain: an ontology language provides a formal framework to describe the concepts (often also referred to as classes) and instances of those concepts which exist in any given domain of interest, and the relationships which hold between them. For example, if a domain of interest is concerned with purchasing products, the ontology may be used to represent the concepts 'Purchaser', 'Supplier', 'Product' and 'Price'. In this context, the ontology might represent a relation 'hasPrice' which holds between the concept 'Product' and the concept 'Price', and the concept 'soldBy' which holds between the concept 'Supplier' and the concept 'Product'. It would then be possible to represent a set of facts about instances of the concepts that have previously been declared. For example:

> ACME is a Supplier
> Product-99 is a Product
> Any number is a Price
>
> Product-99 soldBy ACME
> Product-99 hasPrice 9.99

In the foregoing example, the declaration is that ACME and Product-99 are instances of concepts Supplier and Product respectively.

Ontologies can be used as semantic frameworks: the association of information with ontologies makes that information much more amenable to machine processing and interpretation. This is because formal ontologies are represented in logical formalisms, such as the Web Ontology Language, known as OWL, which allow automatic inferencing over them and over datasets aligned to them. OWL is described in Dean et al (2004), 'OWL Web Ontology Language Reference', W3C Recommendation, 10 February 2004 (see http: //www.w3.org/TR/ow1-ref/).

An important role of ontologies is to serve as schemata or "intelligent" views over information resources. Thus ontologies can be used for indexing, querying, and reference purposes over non-ontological datasets and systems, such as databases, documents and catalogue management systems. Because ontological languages have formal semantics, ontologies allow a wider interpretation of data, that is, an improved inference of facts which are not explicitly stated. In this way, ontologies can improve the interoperability and the efficiency of the usage of arbitrary datasets.

Embodiments of aspects of the present invention aim to build upon the ideas of an ontology, or the like, to provide a user with improved, or at least alternative, searching capabilities.

Summary of the Invention

Embodiments of aspects of the present invention relate in general to the ranking of named entities from a document collection (or any set or repository of content) in a context-dependent manner. The use of context aims to provide a more meaningful set of entities to present to the user. According to preferred embodiments of the invention, the context may be (i) a user query, (ii) a user interest profile, (iii) an ontology, or any combination of two or more thereof. Other contexts are conceivable.

According to a first aspect the present invention provides a computer-implemented method of ranking entities that are associated with selected items of content, the method comprising: selecting a set of items of content from a content repository; determining weightings for at least some of the entities of the selected items, the values of at least some of those weightings being influenced by a pre-determined context; and ranking the entities according to their applied weightings.

The content will typically comprise textual documents but may instead, or in addition, comprise any other kind of content, for example images, sound clips, video clips of other kinds of media, which have been, or can be, associated with one or more entities, for example using associated metadata. The associations may be provided in advance, for example as would be the case in the context of the Semantic Web, or may be generated or derived as part of the method.

Weightings may be determined for said entities at least in dependence upon the significance thereof to the items of content with which they are associated. For example, the significance may relate to the number of references to, or occurrence of, the entities in the content, in cases where the content is text-based. Indeed, weightings may be determined for said entities at least in dependence upon the significance thereof to at least some or preferably all of the selected set of items of content.

Additionally, or alternatively, weightings may be influenced for said entities that are associated with the context. For example, the entities may be included in or at least referred to by the context.

The context may comprise a search query. Indeed, the context may comprise a semantic search query. In either case, the query may contain entities, references to entities or categories to which the entities are related.

In addition, or instead, the context may comprise information indicative of content of interest to a user. For example, the context may comprise a user interest profile. Similarly, the user interest profile may contain entities, references to entities or categories to which the entities are related.

In some embodiments, the context comprises, or at least provides a reference to, a relational arrangement of categories and/or entities. Such an arrangement may be an ontology.

For at least some entities, weightings may be influenced for said entities that are instances of categories, which are associated with the context. For other entities, weightings may be influenced for said entities that have relationships with other entities, which are associated with the context. For yet other entities, weightings may be influenced for said entities, the categories of which have relationships with categories that are associated with the context. For example, an entity may be an instance of a category, which is the same as, or has a relationship with, a category in an ontology.

The method may include determining a semantic distance between categories to which the entities belong and categories that are associated with the context, and influencing weightings according to respective semantic distances.

According to preferred embodiments, weightings may be influenced by being increased or decreased. Weightings for entities may be determined with respect to the respective items of content, or the set of items of content, and at least some of those determined weightings may be adjusted in dependence upon an association between said entities and the context.

In any event, the method may comprise presenting to a user a group of entities including at least the most highly ranked entities. In some cases, where there are only a relatively few ranked entities, all may be presented to the user. In other cases there may be many such ranked entities and only the highest ranked ones may be presented to the user. In such a case, the user may specify that he only wants to receive the top n entities, or entities having weights above a certain level.

The method may be adapted to comprise the feature of presenting additional information to the user in response to the user selecting one of the ranked categories, as will be described in more detail hereinafter.

According to a second aspect, the present invention provides a system adapted to operate according to any method of the first aspect.

According to a third aspect, the present invention provides a search engine process adapted to operate in accord with embodiments of the first aspect, for example, to provide a user with a ranked list of categories that are associated with a selected collection of documents.

Other aspects and embodiments of the present invention include computer program products including instructions encoded on a computer-readable medium and configured to enable a process to perform a method according to any other aspect or embodiment of the present invention.

Brief Description of the Drawings

Aspects and embodiment of the present invention will now be described, by way of example only, with reference to the accompanying drawings, of which:

Figure 1 is an image comprising search results generated by a known Web search engine;
Figure 2 is a block diagram of a system which operates in accord with embodiments of the present invention;
Figure 3 is a block diagram illustrating relationships between documents, metadata and an ontology;
Figure 4 is a tree diagram indicating an exemplary extract from an ontology;
Figure 5 is a tree diagram showing the ontology of Figure 4, including instances of the classes;
Figure 6 is an extract of text showing relations between word in the text and an ontology;
Figure 7 is a flow diagram showing a first example of a search process;
Figure 8 is a flow diagram showing a second example of a search process;
Figure 9 is a flow diagram showing a third example of a search process;
Figure 10 is a flow diagram showing a fourth example of a search process;
Figure 11 is a tree diagram illustrating a user interest profile, which is used according to embodiments of the present invention to rank topics;
Figure 12 is a tree diagram illustrating an exemplary extract from a biological ontology;
Figure 13 is a tree diagram illustrating an exemplary extract from a geographical ontology;
Figure 14 is a tree diagram illustrating an exemplary extract from a commercial ontology;
Figure 15 is a diagram showing a fragment of an ontology concerning a particular instance ('HSBC') of the class (category) 'Bank'; and
Figure 16 is an image illustrating how the bank of Figure 15 might be represented according to an embodiment of the present invention.

Detailed Description of the Invention

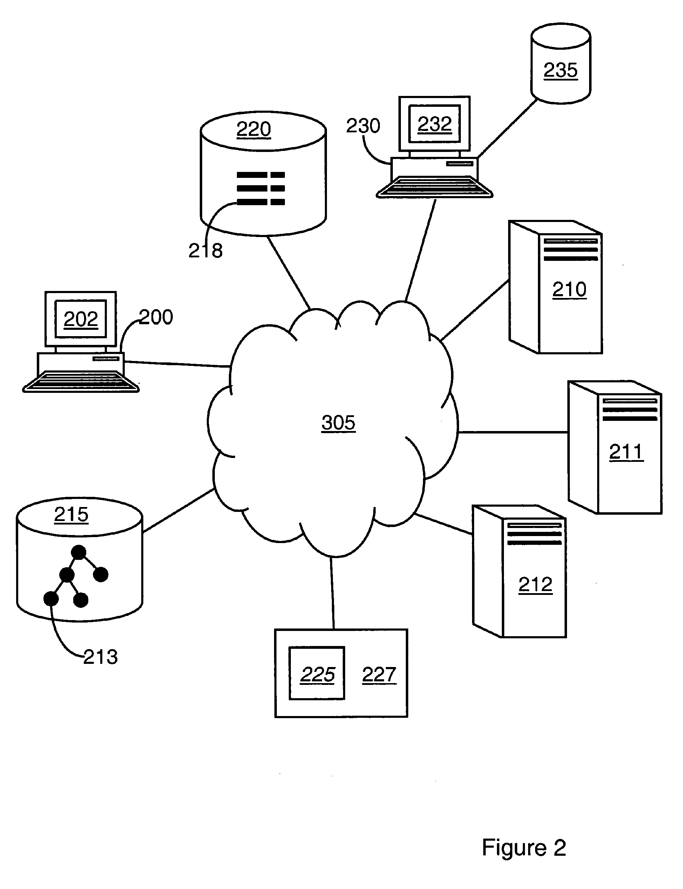

Embodiments of the present invention will now be described with reference to the components that are shown in the schematic block diagram in Figure 2. According to Figure 2, a pre-processing process 200, which, for convenience, will be referred to simply as the 'pre-processor', resides on a client computer 202, which is attached to the Internet 205. The pre-processor 200 in this case is computer program, or programs, which is or are stored in one or more program files on the client computer 202 and can be executed to run on the client computer, as required. The programs may be written in Java™ or C++, for example. The pre-processor 200 is arranged to download documents, via the Internet 205, from various Web servers 210, 211, 212, which are also attached to the Internet. The pre-processor 200 is also programmed to access information relating to a pre-defined ontology of topics 213, which is stored on an ontology database 215, which is also attached to the Internet 205.

A metadata database 220 can be accessed by a search engine process 225, which for convenience will be referred to simply as the 'search engine', which runs on another Web server computer 227, which is attached to the Internet. The search engine 225 in this case is also computer program, or programs, which is or are stored in one or more program files on the search engine Web server computer 227 and can be executed to run as required. Again, the programs may be written in Java™ or C++, for example. The search engine 225 is used by a user, who can submit a search query via a browser process 230, which runs on a user client computer 232, which is also attached to the Internet 205. The user has a user interest profile 235, which is stored on the local client computer 230, and which may be used during a searching stage, as will be described in more detail hereinafter.

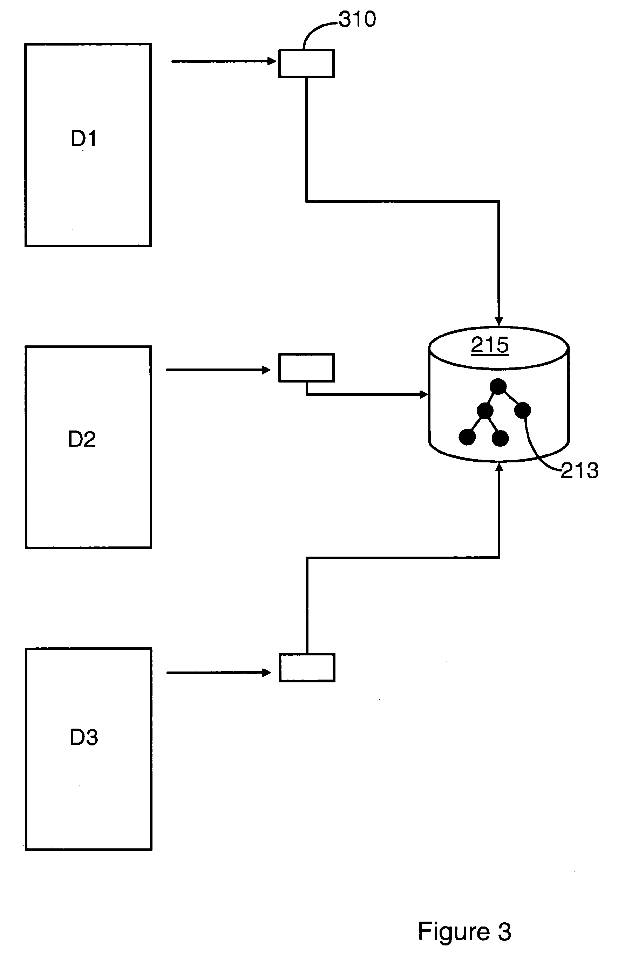

As illustrated in the block diagram in Figure 3, the pre-processor 200 downloads documents D1-D3, in a similar fashion to other search engine pre-processing systems, and then associates text in the documents to instances of particular ontological classes of the ontology 213. The associations 310 are recorded as part of the metadata 218 in the metadata database 220, which can be used for searching later on.

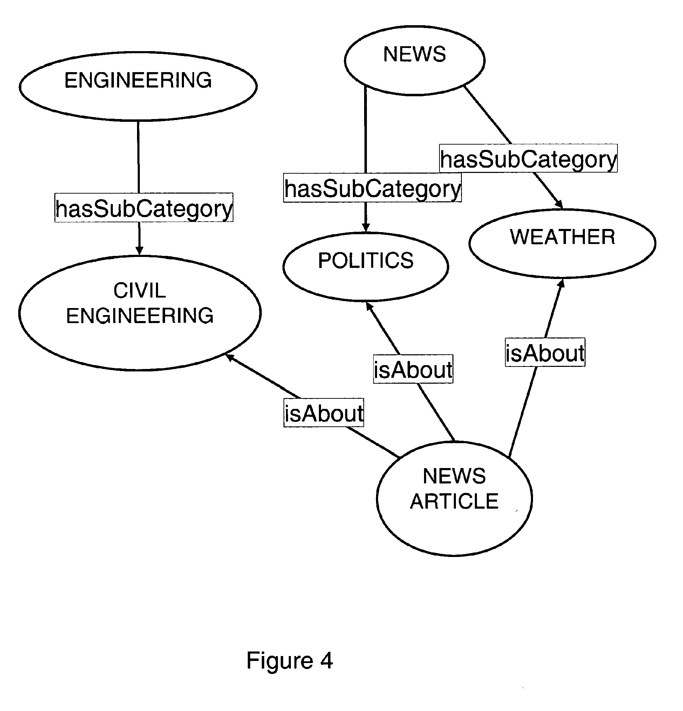

In the present context, an ontology 213 is generally defined as set of concepts that are arranged in a hierarchy of relationships, as illustrated in the tree diagram in Figure 4. More particularly, an ontology 213 may be defined as a formal specification of a conceptualisation of a knowledge domain: an ontology language provides a formal framework to describe the concepts (also described as classes or categories) and instances of those concepts which exist in any given domain of interest, and the relationships which hold between them. Figure 4 illustrates a simple example of an extract from an ontology containing news and general topics, which have been associated with some notional news articles. In this example, topics are defined as ontological categories (or classes) and related to each other with a 'hasSubCategory' relationship (often also referred to as the subclass relationship), which defines one topic as being a subcategory of another. In particular, the ontology defines:

The "Engineering" general topic 'hasSubCategory' "Civil Engineering"
The "News" general topic 'hasSubCategory' "Politics"
The "News" general topic also 'hasSubCategory' "Weather"

The ontology also contains a 'News Article' category, which is related to the topic categories via an 'isAbout' relationship, which can be used to define the topics which a specific article (that is, an instance of category 'News Article') is about. In particular, the ontology defines:

The "News Article" (class) 'isAbout' the "Civil Engineering" topic
The "News Article" (class) 'isAbout' the "Politics" topic
The "News Article" (class) 'isAbout' the "Weather" topic

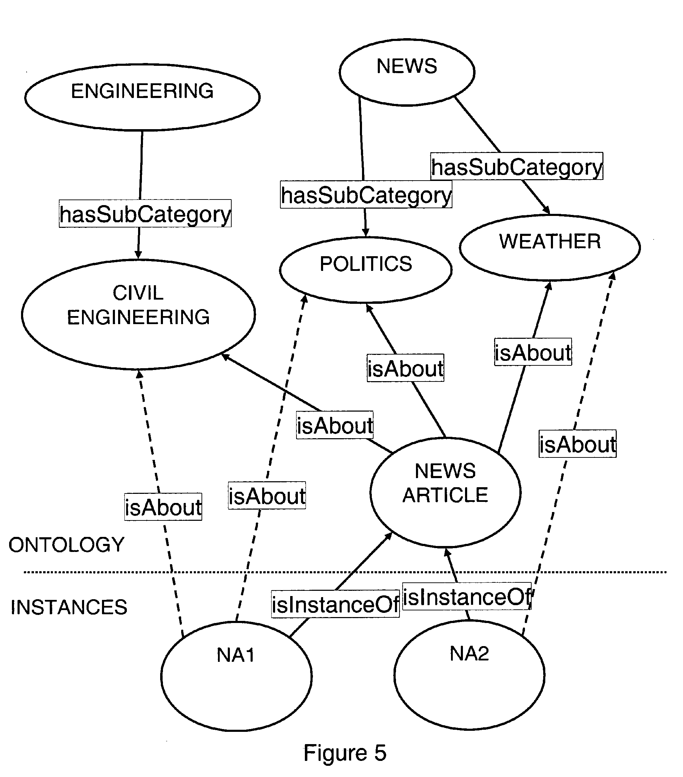

Thus the categories and relationships define the concepts in a given domain (application area) and the links which can hold between those concepts. As illustrated in the tree diagram in Figure 5, instances of these categories can then be created and it can be specified for which instances the relationships actually hold. So, for example, instances NA1 and NA2 of the category News Article are created, each representing a specific news article. As shown, NA2 may be specified as being about the Weather and NA1 may be specified as being about Civil Engineering and Politics (using the isAbout relationship).

In practice, the ontology is stored on an ontology database 215. An exemplary ontology is PROTON ontology (see http://proton.semanticweb.org/), which has been developed in the scope of the Semantically-Enabled Knowledge Technologies, or "SEKT", project (see http://www.sekt-project.com/). The ontology currently has about 400 classes and 100 relationships, but is being adapted all the time.

Thus, using again the example in Figure 5, the metadata that is associated with the respective subdocument would include the foregoing six relationships, the categories of which appear in an associated ontology, for example the PROTON ontology. Effectively, the metadata connects the subdocument to the respective knowledge domain of the ontology.

The association of document text to classes in this way is known, for example, from Kiryakov et al. 'Semantic Annotation, Indexing, and Retrieval', Elsevier's Journal of Web Semantics, Vol. 2, Issue (1), 2005. According to Kiryakov, associations between the text occurring in documents and ontological instances are often referred to as "semantic annotations" or simply "annotations".

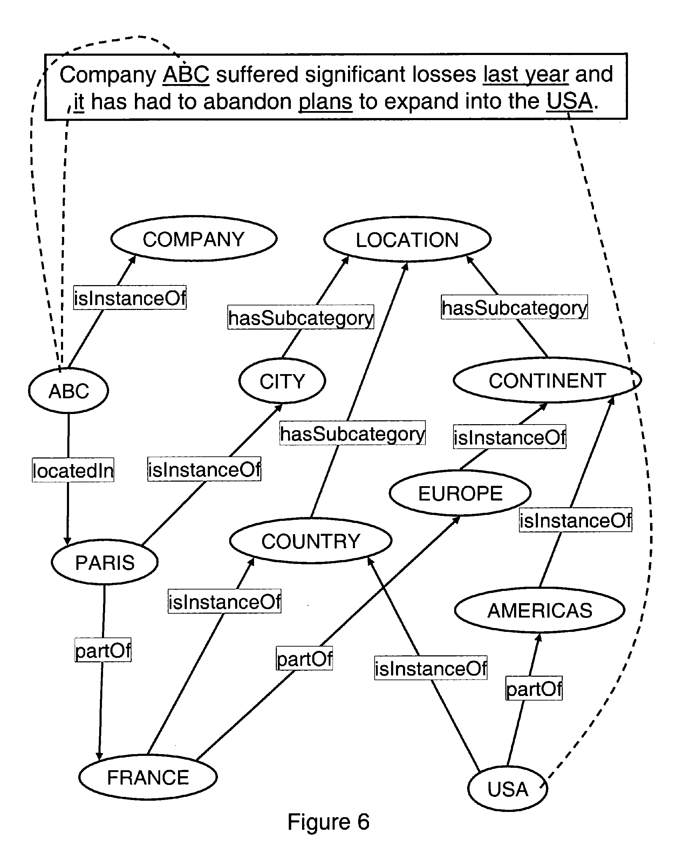

An example of a semantically annotated document text is illustrated in the relationship diagram in Figure 6. Figure 6 shows a portion of text, in which 'named entities' ("ABC", "last year", "plans" and "USA") have been identified and underlined. 'Named Entity Recognition' is a known technique (http://en.wikipedia.org/wiki/Named_entity_recognition) for the recognition of entity names (for people, locations, organisations, place names, temporal expressions, numerical expressions and so forth). 'Coreference' is also a known technique (http://en.wikipedia.org/wiki/Coreference) for the identification of noun phrases that refer to the same object.

The words "ABC" and "USA" are shown, using dotted curves, as having associations with an ontology (only a part of which is shown): specifically, the ontological entities ABC and USA respectively. Similarly, the word "it" is shown as referring to the named entity ABC. According to the ontology, ABC is an instance of (isInstanceOf) class COMPANY, which is located in (locatedIn) PARIS. PARIS is an instance of class CITY, which is a subclass of class LOCATION. PARIS is part of (partOf) FRANCE, which is an instance of class COUNTRY, which is also a subclass of LOCATION. FRANCE is also part of EUROPE, which is an instance of the class CONTINENT, which is also a subclass of LOCATION. Finally, the USA is an instance of class COUNTRY and part of the AMERICAS, which is also a subclass of CONTINENT.

From the example in Figure 6, it can be seen how document text can be semantically annotated with reference to an ontology, increasing the amount of information that is available to act as a basis for searching. For example, a semantic query, intended to find French companies that made a loss last year, would be able to find the document text of Figure 4, as the text indicates the company ABC made a loss, and the ontology reveals that the company is French, even though nothing in the text of the document identifies it as French.

It is often valuable to present the user with a list of such named entities as part of his or her search results, highlighting the entities which occur in a retrieved document set. This is evidenced, for example, by a recent large-scale human interaction study on a personal content IR system by Dumais et al. "Stuff I've Seen: A system for personal information retrieval and re-use.", In proc. of SIGIR'03, 2003, Toronto, ACM Press, which demonstrates that, in many cases, named entities are central to user search requirements.

As the size of the document collection being searched increases, this entity list in general becomes longer and thus less easy for a user to read and digest. Furthermore, many entities may be irrelevant to a user's specific interests at a given time. Therefore it is very useful to rank the named entities which occur and present the most important ones (in the context of the particular user or query) to the user.

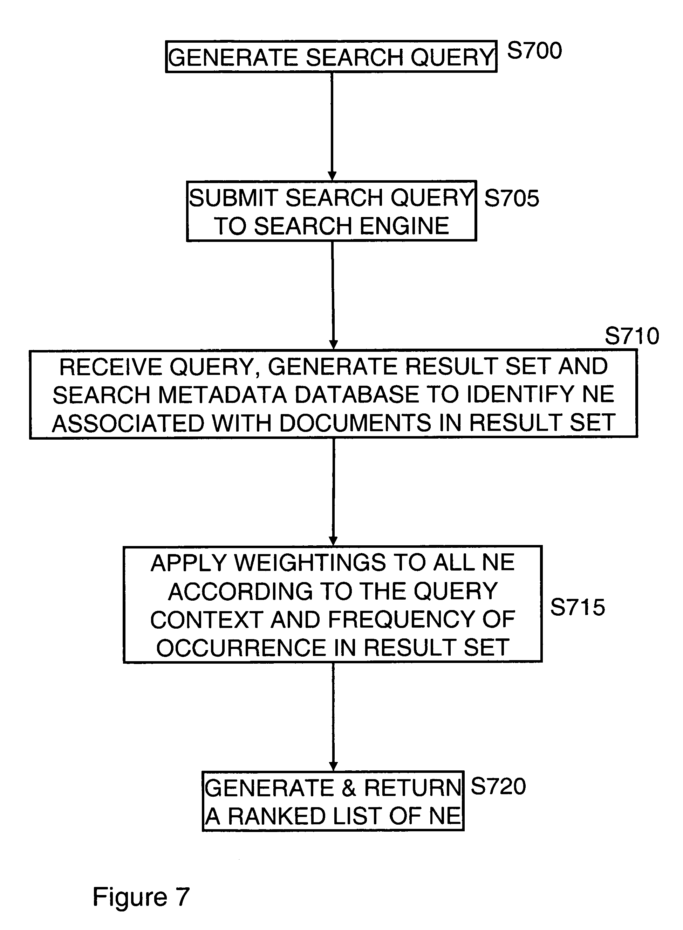

A first way of ranking named entities, associated with documents in a document repository such as the Web, will now be described with reference to the flow diagram in Figure 7. In this example, a search query is used to generate a result set of relevant documents (as in a search engine); then a combination of the number of occurrences of each named entity in the result set and a context is used to rank the named entities.

According to Figure 7, in a first step (S700), a user generates a search query, which, in this example is a simple keyword search query, containing one or more keywords that the user believes will cause the search engine 225 to return useful results. In this case, the search query can be regarded as defining a 'context' to be used in analysing documents judged relevant to the query. As will be described hereinafter, another such context might be a 'user profile', which is a representation of the particular interests of a user. A third such context can be an ontology itself, as will also be described in detail hereinafter.

Next (S705), the user submits the query to the search engine using a standard browser process. In a next step (S710), the search engine receives the query and uses the query to search the metadata database to find documents having named entities that match the query terms, for example, using the aforementioned known techniques of Named Entity Extraction and coreference. Named entities in this example might include items such as people, places, organisations and dates. The result of the search is a list of document references, referred to hereinafter as a 'result set'. Alternatively, the result set might be generated by processing the query using standard search engine techniques as described in the Background to the Invention.

Next (S715), the search engine applies weightings to all named entities in the result set, with weightings for the named entities referred to in the query being biased towards being higher. Finally (S720), on the basis of the weightings, the search engine ranks the named entities in a list in the order of their weightings and returns the list to the user.

An exemplary ranking algorithm suitable for this method first divides the entities in the result set into those which occurred in the query (Group 1, say) and those which did not (Group 2). The entities in these resulting groups are then in turn given weights equal to how many times each entity occurs in the result set.

In a variation, entities can be weighted taking into account not only the number of occurrences in the document(s) in question but also taking into account their occurrence in the entire document collection, the intuition being that an entity occurring a lot in one document which is relatively rare across the entire document collection is in general of more interest than one occurring frequently in many documents. This could be realised by an application of the known tf.idf weighting scheme to entity occurrence (Frakes, W.B. & Baeza-Yates, R., "Information Retrieval, Prentice-Hall, London, 1992). This algorithm is normally used for calculating the relative importance ("weight") of words in documents. According to embodiments of the present invention, the same technique is applied at the semantic level. That is, the "meaning" of words is taken into account and words are equated with the same meanings (for example, "Mr Bush, "the president", he"; "UK", "Royaume Uni", etc). In this case, the weighting can be calculated as follows:

$$W_{ij} = T_{ij} * \log(N/n)$$

where:

    $W_{ij}$ is the weight of entity i in result set j
    $T_{ij}$ is the number of times entity i occurs in the documents in j

N is the total number of documents in the collection

n is the number of documents in the collection in which entity i occurs

Entities (within their subgroups) are then ranked according to this weighting.

In a further variation, the ordering of the two groups is not used in ranking: instead, those named entities referred to in the query (Group 1) have their weighting multiplied by some pre-defined factor to increase their weight. All entities (from both groups) are then ranked according to their weight.

In any event, many weighting schemes can be adapted or devised for use according to embodiments of the present invention.

Of course, the return by the search engine of the ranked list of named entities would typically accompany a list of the documents found (that is, the ranked result set), as in a normal search engine process.

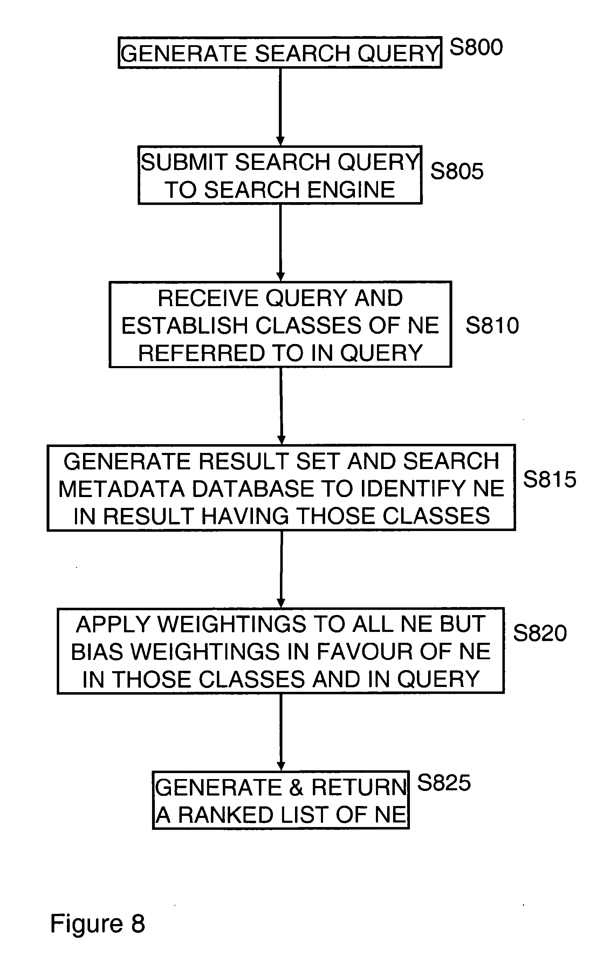

A variant of the process described with reference to Figure 7 will now be described with reference to the flow diagram in Figure 8.

According to Figure 8, in a first step (S800), a user generates a search query, which, in this example is a simple keyword search query, containing one or more keywords that the user believes will cause the search engine 225 to return useful results. The search query dictates the context within which the search occurs. The user submits (S805) the query to the search engine using a standard browser process. In a next step (S810), the search engine receives the query, matches terms (words and phrases) in the query to named entities and establishes the categories (or classes) to which the named entities belong. For example, if the keywords are 'BT' and the 'UK', the search engine may refer to the metadata and/or to a known ontology to establish the respective classes (also referred to as categories), which, in this example, are COMPANY and COUNTRY. In a next step (S815), the search engine uses the metadata database in order to find those documents (the result set) containing the entities identified as occurring in the query; BT and UK in our example. Alternatively, again, the result set might be generated by processing the query using standard search engine techniques as described in the Background to the Invention. In a next step (S820), the search engine applies weightings to all named entities in the result set, with weightings for the named entities occurring in the query (BT and UK) being biased towards being highest and named entities that are instances of the identified classes (in the example COMPANY and COUNTRY) then being biased towards being higher than all other entities (except BT and UK). Finally (S825), on the basis of the weightings, the search engine ranks the named entities in a list in the order of their weightings and returns the list to the user.

Weightings may be assigned as described for the previous example, with the exception that the named entities referred to by documents in the result set are now split into 3 groups: 'BT' and 'UK' comprising the highest weighted group; all other named entities which are instances of 'COMPANY' and 'COUNTRY' being in the second ranked group; and all other named entities being in the third group. Where ordering the ranking by group is not carried out but is replaced by a weighting factor, the weighting factors are assigned such that the factor for 'BT' and 'UK' is greater than that for named entities which are instances of 'COMPANY' and 'COUNTRY' and all other named entities have no weighting factor applied. The factors can be varied according to the importance of each group of entities for a given application.

Associating named entities with references to them in sets of documents can be used to perform more focussed searches, such as: "Find all documents which refer to a Politician named George Bush and a Country called Iraq", as opposed to today's search engine technology which might instead pose the query: "Find all documents containing the strings 'George Bush' and 'Iraq.' ". Another example of such a semantic query would be: "Find all documents referring to a Person that hasPosition 'CEO' within a Company, locatedIn a Country with name 'UK'.

In summary, regarding ranking when context is a keyword query: identify named entities in the query (they have top ranking), then identify the categories of those entities in the query - the other entities in those categories then have next highest ranking, followed by all other entities. Within each of these three groups, ranking is done by number of occurrences of the entity in all the documents in the result set (or some variation of this - for example tf.idf).

The processes of Figures 7 and 8 can be enhanced by using a semantic query of the form:

Search for 'BT' (an instance of class COMPANY) in the 'UK' (an instance of class COUNTRY)

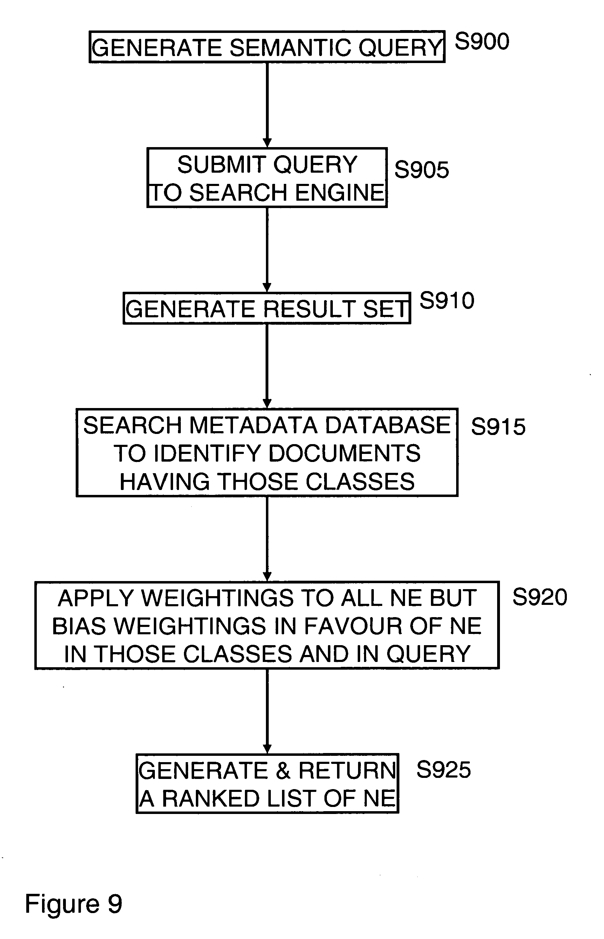

In this case, the search is simplified with respect to the operational requirements of the search engine, since the categories are supplied by the query. The modified process will now be described with reference to the flow diagram in Figure 9.

According to Figure 9, in a first step (S900), a user generates the aforementioned semantic search query, containing one or more terms that the user believes will cause the search engine 225 to return useful results. As before, the search query dictates the context within which the search occurs. The user submits (S905) the query to the search engine using a standard browser process. In a next step (S910), the search engine receives the query and uses the query to search the metadata database to find documents having named entities that are in the COMPANY and/or COUNTRY class (the result set). In a next step (S915), all the named entities referred to in the result set which are instances of classes mentioned in the query are found using the metadata database. In a next step (S920), the search engine applies weightings to all named entities in the search document collection, with weightings for the named entities that are instances of COMPANY and COUNTRY being biased towards being higher. Finally (S925), on the basis of the weightings, the search engine ranks the named entities in a list in the order of their weightings and returns the list to the user. Weightings and rankings are determined, for example, according to precisely the same method as described for the process embodied in Figure 8.

The ranking of the named entities indicates to the user how important each of the named entities is in each document. As a result, the user learns a significant amount of information about the documents that have been found. For example, if the search terms included 'Hurricane Katrina' and the user was interested in meteorology, but the named entities in the returned list included high rankings for "President Bush" and "News", then the user would deduce that the search terms had not been suitable for returning the desired results. Alternatively, if the named entities included high rankings for 'weather' and 'precipitation', the documents would more likely be important to the user.

The processes described with reference to any of Figures 7 to 9 can be modified by associating with each named entity multiple labels describing that entity. For the current Prime Minister of UK (at the priority date of this application), for example, the labels "Tony Blair," "Blair," "Mr Blair," "PM," "Prime Minister," and so on might be used. This means that query terms can be more easily identified with named entities by matching against these labels.

In summary, regarding ranking when context is a semantic query: named entities in the query will be known form the query (again they have top ranking), then identify the categories of those entities in the query - the other entities in those categories then have next highest ranking, followed by all other entities. Within each of these three groups, ranking is done by number of occurrences of the entity in all the documents in the result set (or some variation of this - for example tf.idf). It should be noted that a semantic query may have zero entities in the query, only categories (for example "find me all documents containing named entities of category Country").

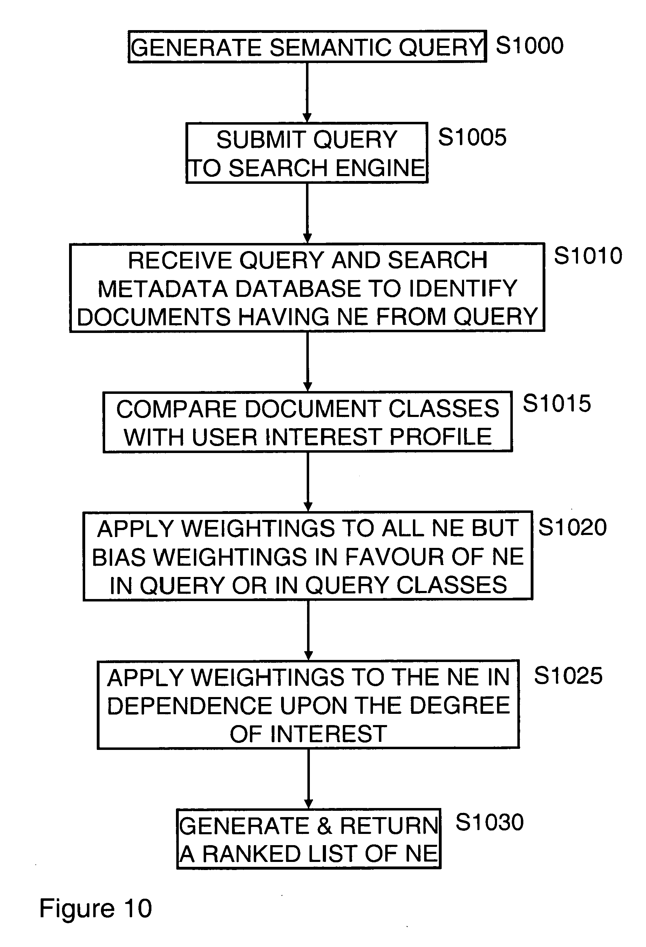

An alternative way of ranking named entities associated with documents in a document collection or repository such as the Web, will now be described with reference to the flow diagram in Figure 10. In this case, rather than taking (only) a user query as the context for ranking the named entities, a user interest profile (which is a representation of the longer term interests of a user) is used as the context for analysis.

According to Figure 10, in a first step (S1000) a user generates a semantic query, for example, as in the process of Figure 9, containing the terms 'BT' and 'UK'. The user submits (S1005) the query to the search engine 225 using a standard browser process. In a next step (S1010), the search engine 225 receives the query and uses the query to search the metadata database 220 to find those documents having named entities 'BT' and 'UK' (the result set). In a next step (S1015), the search engine 225 compares the user interest profile 235 with the categories (or classes), instances of which (that is, the named entities) appear in documents in the result set. In this example, a user interest profile 235 contains categories, representing the interests of the user, and an associated level of interest the user has in each category. The user interest profile may also comprise named entities. Then (S1020), the search engine applies weightings to all named entities in the result set, with weightings for the named entities 'BT' and 'UK' being highest and named entities that are instances of COMPANY and COUNTRY being biased being higher than all others except 'BT' and 'UK'. Next (S1025), the search engine 225 applies increased weightings to named entities that are instances of categories that appear in the user profile, in dependence upon the respective level of user interest. Accordingly, named entities that appear in the query have increased weightings and categories that appear in the user interest profile 234 also have increased weightings. Finally (S1030), on the basis of the weightings, the search engine ranks the named entities and topics in a list in the order of their weightings and returns the list to the user.

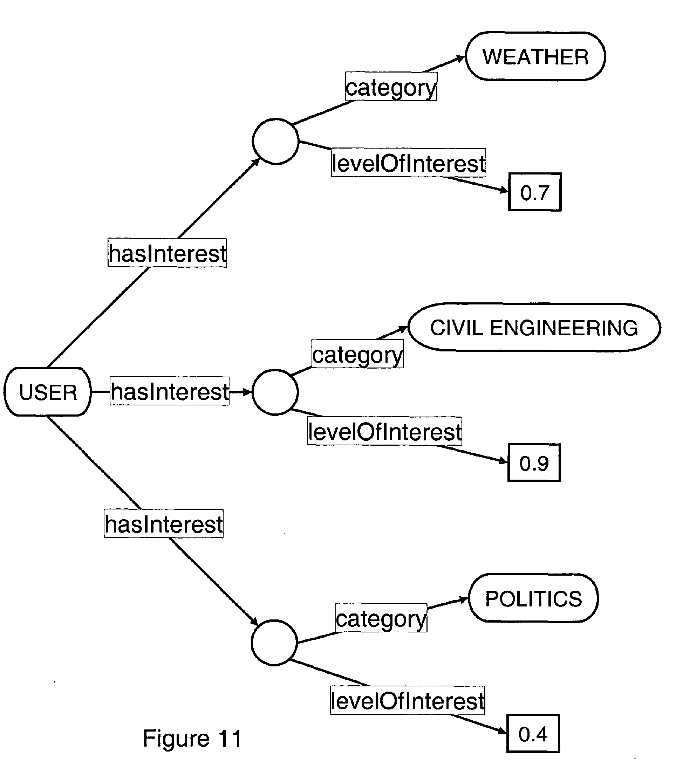

In this case, a suitable exemplary ranking algorithm first divides the entities in the result set into those which occurred in the query (Group 1, say), those which are instances of a category (class) from the query (Group 2), those which are instances of classes occurring in the user profile (Group 3) and all others (Group 4). The entities in these resulting groups are then assigned weights equal to how many times each entity occurs in the result set, with the exception of Group 3, where the weight is determined by multiplying the number of occurrences of the entity by the level of interest of the user in the relevant category, which is derived from the respective user interest profile, as shown in Figure 11.

In a variation, entities can be weighted taking into account not only the number of occurrences in the document(s) in question but also taking into account their occurrence in the entire document collection, using $W_{ij} = T_{ij} * \log(N/n)$, as described hereinbefore.

Entities (within their subgroups) are then ranked according to their weighting. The final ranking of entities is then the ranked list from Group 1, followed by the ranked list from Group 2, followed by the ranked list from Group 3, followed by the ranked list from Group 4. In a variation the Group 3 entities may be considered more important than Group 2 and the order of these groups can be reversed.

In a further variation, the step of splitting the entities into 4 subgroups is not used directly: instead, the named entities in each group have their frequency of occurrence in the result set multiplied by some pre-defined factor (which could be varied for different applications) for that group to increase their weight. All entities are then ranked according to their weight (being the product of the factor for the group the given entity is in and the number of occurrences of the entity).

Use of user interest profiles in named entity ranking, as described in the process depicted in Figure 10, can also be applied to the result sets generated using any of the three processes depicted in Figures 7-9.

In summary, with regard to ranking when context is a user profile: named entities in the query again have top ranking, then identify the categories from the user profile - the other entities in those categories then have next highest ranking, followed by all other entities. Within each of these three groups, ranking is done by number of occurrences of the entity in all the documents in the result set (or some variation of this - for example tf.idf). A potential variation here is that the user profile categories can have weights associated.

A user interest profile according to the present exemplary embodiment will now be considered in more detail with reference to the exemplary tree diagram in Figure 11.

According to Figure 11, the tree-diagram illustrates an exemplary user interest profile, in which a user has an interest in (denoted "hasInterest") a number of categories, each having an associated level of interest (denoted "levelOfInterest"). As shown, the exemplary interest profile has three categories of interest - "weather", "civil engineering" and "politics" - and these categories have respective levels of interest 0.7, 0.9 and 0.4, which can be used, as described hereinbefore, to determine weightings of search results.

An interest profile can be generated manually by each user, or it can be determined, or adapted, semiautomatically or automatically, by a monitoring process that monitors the browsing and/or searching behaviour of the user.

In one exemplary scenario, the monitoring process is only semi-automatic, whereby the process provides the user with an option (for example using a pop-up "yes/no" dialog box) to add to the interest profile topics associated with a document, which has been downloaded and is being inspected by the user. If the user responds in the affirmative to the pop-up or dialog box, the monitoring process adds the topics that are associated with the document to the interest profile. Instead of a pop-up dialog box, the user interface of the search engine may simply have a tick box, or the like, which a user can tick for each document that should influence the interest profile. Many alternative user interface options are available.

In an alternative scenario, the monitoring process is fully automated, whereby the process adds topics automatically to the interest profile in dependence upon certain criteria. For example, the criteria might be that the user has downloaded the document and spent more than a brief period inspecting the contents thereof. Many other criteria may be devised for determining whether to modify the interest profile.

In any event, the monitoring process may be able to extract the topics from metadata that is associated with each document (if that metadata exists). Alternatively, or in addition, when a document is downloaded, as an automatic background task, the monitoring process may apply known methods to classify documents, and associate them with topics, as they are retrieved by the user.

It will be appreciated that, over a significant period of time, an interest profile can become large and complex. However, over time, the profile is also expected to become highly representative of the particular interests of a user.

An advantage of classifying the references to named entities against an ontology (or other hierarchical or relational arrangement) is that it then becomes possible to apply 'reasoning' to the searching process. Reasoning is the inference of new facts from those explicitly represented in the ontology based on mathematical logic.

Reasoning makes use of the relationships in the ontology. In this sense, the ontology becomes a part of the context.

Reasoning may make use of sub and super category relationships. Alternative or additional relationships may also exist between categories and these can also be exploited by reasoning.

First, reasoning may be applied to the search process in order to draw relationships between a search query or a user interest profile and documents that would not otherwise be seen as being related to one another. For example, assume a user interest profile names the category 'Vertebrate', while a document refers to a named entity of category 'Reptile' ("lizard," say). A comparison by a search engine according to any one of the processes in Figures 7 to 10 would not identify an association and would not increase the weight of named entities of the category 'Reptile', as being of particular interest to the user.

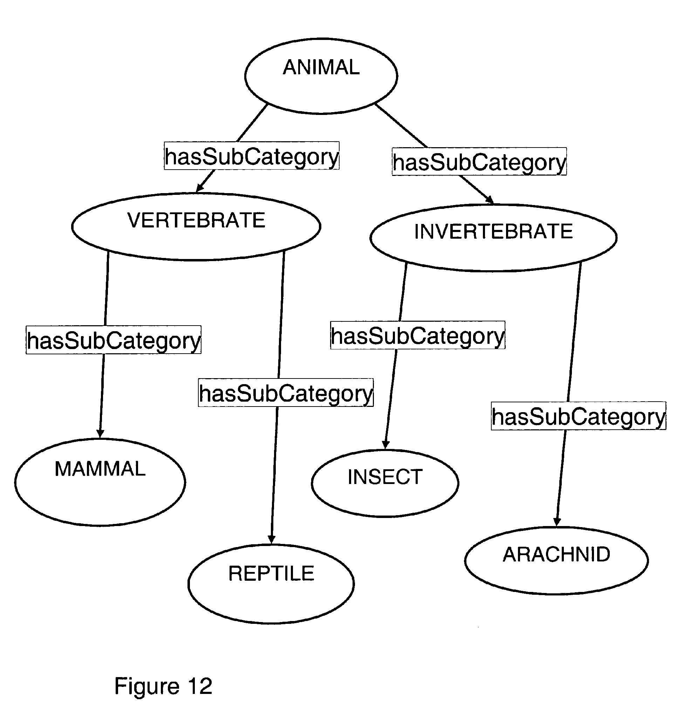

However, reasoning can overcome this limitation and be used to draw a relationship, which can increase the weight applied to Reptile. More particularly, with reference to the tree diagram in Figure 12 (which represents part of a biological ontology), reasoning over the ontology 213 is used to determine that 'Reptile' is a direct sub category of 'Vertebrate'. Hence, reasoning determines that there is a semantic distance of only 1 between 'Reptile' and 'Vertebrate', and an increased weighting may be applied to named entities of category 'Vertebrate' (although, with a ranking below that of named entities which are instances of 'Reptile'). In contrast, it can be determined that 'Reptile' is an indirect subcategory of 'Animal' with semantic distance 2. That is, there are two semantic relationships separating Animal and Reptile. In this case, a lower weighting would be applied to named entities of type 'Animal'. In a variation of the approach, the semantic relationships could themselves be weighted according the 'semantic closeness' or similarity of the concepts and these weighting factors applied when calculating the semantic distance.

The semantic distance so calculated can be used to modify the named entity weights, which were calculated in the processes depicted in Figures 7-10, for example by dividing each weight by the one more than the semantic distance between the category of the entity at hand and the nearest category mentioned in the query (strictly, category of which a named entity is mentioned in the query in the case of non-semantic queries) and/or user profile. This may be found too severe a reduction in weighting in practice and other factors based on semantic distance (such as the square root of the semantic distance) could instead be applied. It should be noted that the addition of one to the semantic distance mentioned above is a necessary adjustment factor, since otherwise modification to the weights based on semantic distance when applied to named entities of categories occurring in the query and/or user profile would result in division by zero since named entities from those categories would have a semantic distance of zero (from themselves).

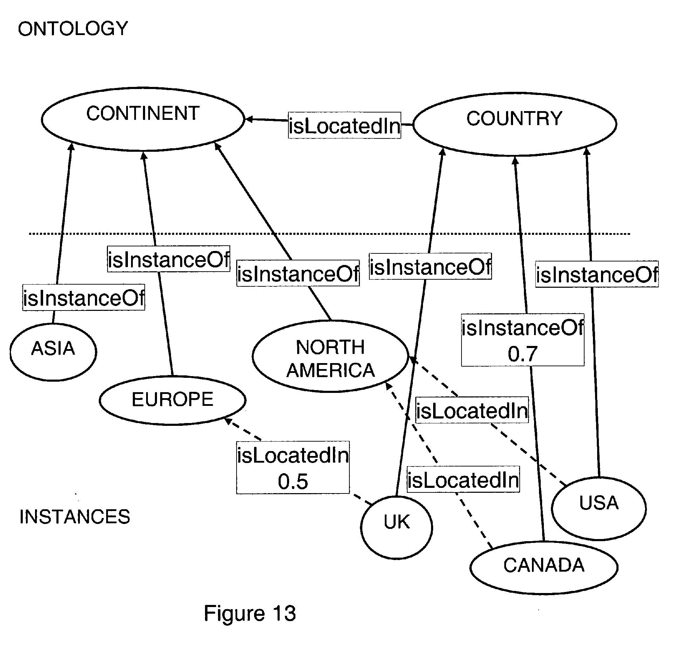

Such reasoning capability is not limited to the subcategory relationship but can be applied over a richer set of relationships. Considering the ontology fragment depicted in Figure 13, for example, a search query mentioning Europe would be considered to be more closely linked to documents mentioning the UK than to those mentioning the USA, since UK is linked directly to Europe by the isLocatedIn relationship. In this example, weights might also be added to the relationships isLocatedIn and isInstanceOf of, for example, 0.5 and 0.7 respectively (as shown in Figure 13) in order to reflect the fact that the isLocatedIn relationship is a more significant semantic link than the isInstanceOf relationship.

Another aspect of ontological reasoning is the ability to specify rules or axioms which allow new facts to be inferred from those already represented in the ontology. A number of formal languages based on mathematical logic have been proposed to represent rules which can reason over ontologies including, for example, SWRL as described in "SWRL: A Semantic Web Rule Language Combining OWL and RuleML," W3C Member Submission, 21 May 2004, (http://www.w3.org/Submission/SWRL/).

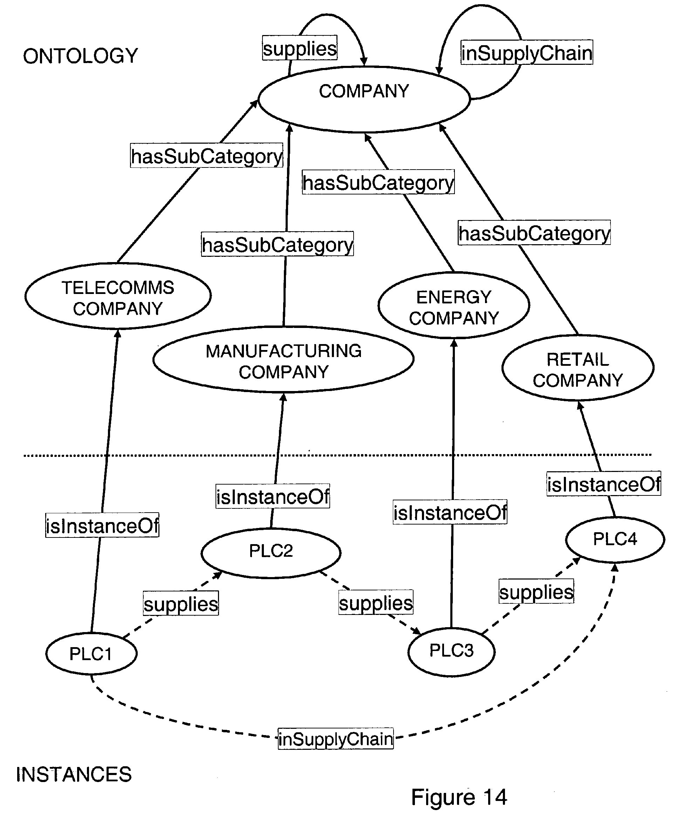

The use of rules is important since it can lead to the identification of closer semantic distance than is apparent from the ontology itself. For example, consider four companies PLC1, PLC2, PLC3 and PLC4 operating in the telecommunications, manufacturing, energy and retail sectors respectively, as show in Figure 14. Assume that PLC1 is a supplier to PLC2, which supplies PLC3, which in turn supplies PLC4. The distance between PLC1 and PLC4 would be considered three ("3") based on the ontological structure. However, suppose we also have rules linking suppliers as follows:

    R1 IF supplies(X,Y) THEN inSupplyChain(X,Y)
    R2 IF supplies(X,Y) & inSupplyChain(Y,Z) THEN inSupplyChain(X,Z)

R1 states that if one company supplies another, they are part of the same supply chain. R2 states that if one company supplies a second who is part of the same supply chain as a third company, the first and third companies are part of the same supply chain. From these two rules and the ontology depicted in Figure 14, it is possible to infer that:

    inSupplyChain(PLC 1 ,PLC4)

This indicates that both companies, PLC1 and PLC4 are in the same supply chain and, according to this example, are given a semantic distance of only one ("1"). Thus, if a search query includes PLC1, documents mentioning PLC4 become relevant and PLC4 is, therefore, given an increased weighting.

In summary, regarding ranking when context is an ontology (that is, using reasoning): named entities in the query again have top ranking, then identify the categories from the query and/or user profile as before - the other entities in those categories then have next highest ranking, followed by all other entities. Within each of these three groups, ranking is done by number of occurrences of the entity in all the documents in the result set (or some variation of this - for example tf.idf). An important variation here is that the named entities in the third "all other entities" group are ranked not only according to their occurrence in the result set but also according to their semantic distance from the categories occurring in the user profile and/or query.

It will be appreciated that the ranked list of entities created using any or all of the methods described above may be judged too long to present to the user, particularly in a large document collection and/or when the collection comprises long documents. If required, the ranked entity list may be pruned. This pruning can be based on a maximum number of entities to display (20, say) or on the minimum weight a given entity must have in order to be shown to the user (n, say) or on a combination of these factors (for example, display 20 named entities or only those with weight greater than n, whichever is the shorter).

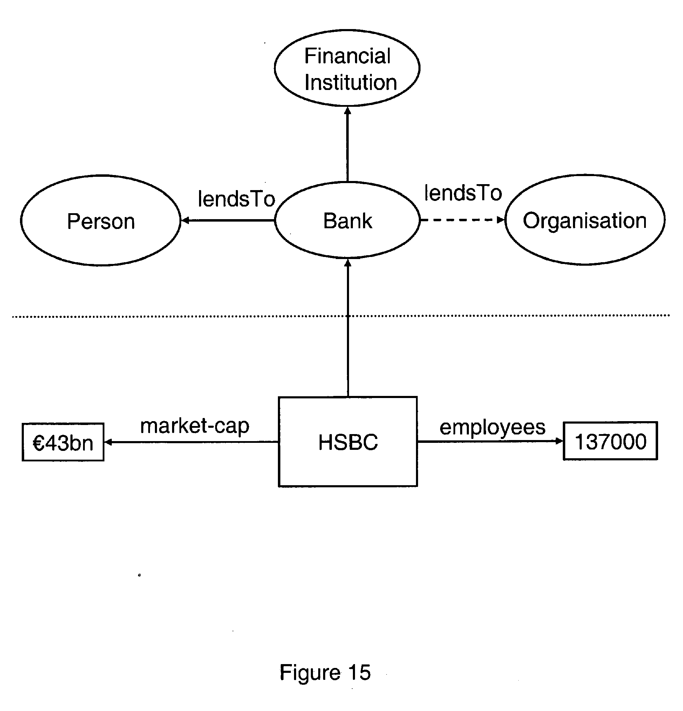

Presentation of relevant named entities to users based on their profile or a query term they have entered is found to be extremely useful. The named entities give a clear indication of the themes of the result set (documents returned) and can be used to modify the user query or prompt a new query. Furthermore, they can be used to generate additional valuable information for the user by extraction of information from the ontology. Figure 15, by way of example, shows a fragment of an ontology concerning a particular instance ('HSBC') of the class (category) 'Bank'. This fragment can be used to generate a short summary of information. For example, the summary may be generated is response to a user clicking on the respective named entity in the ranked list. The summary identifies that HSBC is an instance of class 'Bank', which is a subclass of 'Financial Institution'. The class Bank lends money to (lendsTo) the class 'Person' and also to the class 'Organisation'. HSBC is identified as having a market capitalisation of 43bn Euros and has 137000 employees.

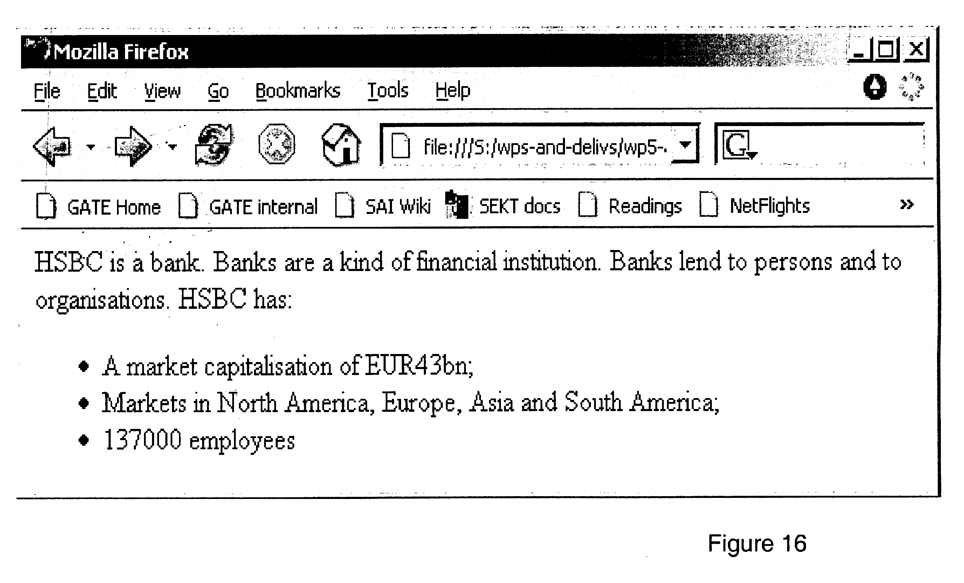

In this case, the summary provided might be as shown in Figure 16, which shows an exemplary screen image, which presents the foregoing information about HSBC in a tabulated, natural language layout.

The above embodiments are to be understood as illustrative examples of the invention. Further embodiments of the invention are envisaged and will be evident to the skilled person. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer-implemented method of ranking entities that are associated with selected items of content, the method comprising: selecting a set of items of content from a content repository; determining weightings for at least some of the entities of the selected items, the values of at least some of those weightings being influenced by a pre-determined context; and ranking the entities according to their applied weightings.

2. A method according to claim 1, comprising determining weightings for said entities at least in dependence upon the significance thereof to the items of content with which they are associated.

3. A method according to either preceding claim, comprising determining weightings for said entities at least in dependence upon the significance thereof to the set of selected items of content.

4. A method according to any one of the preceding claims, comprising influencing weightings of said entities that are associated with the context.

5. A method according to any one of the preceding claims, wherein the context comprises a search query.

6. A method according to any one of the preceding claims, wherein the context comprises a semantic search query.

7. A method according to any one of the preceding claims, wherein the context comprises information indicative of content of interest to a user.

8. A method according to any one of the preceding claims, wherein the context comprises a relational arrangement of categories and/or entities.

9. A method according to any one of the preceding claims, wherein the context comprises an ontology.

10. A method according to any one of the preceding claims, comprising influencing weightings for said entities that are instances of categories, which are associated with the context.

11. A method according to any one of the preceding claims, comprising influencing weightings for said entities that have relationships with other entities, which are associated with the context.

12. A method according to any one of the preceding claims, comprising influencing weightings of said entities, the categories of which have relationships with categories that are associated with the context.

13. A method according to any one of the preceding claims, including determining a semantic distance between categories to which the entities belong and categories that are associated with the context, and influencing weightings according to respective semantic distances.

14. A method according to any one of the preceding claims, comprising influencing weightings by increasing or decreasing a respective weighting.

15. A method according to any one of the preceding claims, comprising determining weightings of entities with respect to the respective items of content, or the set of items of content, and adjusting at least some of those determined weightings in dependence upon an association between said entities and the context.

16. A method according to any one of the preceding claims, comprising presenting to a user a group of entities including at least the most highly ranked entities.

17. A method according to any one of the preceding claims, comprising presenting additional information to the user in response to the user selecting one of the ranked entities.

18. A system adapted to operate according to any one of the preceding claims.

19. A search engine process adapted to operate according to any one of the preceding claims.

100

hurricane katrina - Yahoo! Search Results - Microsoft Internet Explorer provided by BT Configuration D ... _ □ X

File   Edit   View   Favorites   Tools   Help

Yahoo!  My Yahoo!  Mail   Welcome, Guest [Sign In]                                    Search Home  Help

**YAHOO!** SEARCH

Web | Images | Video | Audio | Directory | Local | News | Shopping | More »

hurricane katrina                                                          Search

My Web    Answers BETA                          Search Services   Advanced Search   Preferences

Search Results                          Results 1 - 10 of about 43,700,000 for **hurricane katrina** - 0.07 sec. (About this page)

Also try: **hurricane katrina pictures**, **hurricane katrina date**  More...

SPONSOR RESULTS

- Red Cross: **Hurricane Katrina** Appeal
  www.redcross.org.uk    Please donate directly to the American Red
  Cross at www.redcross.org today.

Y! News Results for **hurricane katrina**
Carpentry instructor observes recovery from **Hurricane Katrina** - Sioux City
Journal - Mar 12 11:21 PM
U of M architecture students help **Hurricane Katrina** victims - KARE 11
Minneapolis-St. Paul - Mar 12 12:39 PM
**Hurricane Katrina**: Louisianans take refuge locally - Benton Courier - Mar
11 5:38 PM
Yahoo! Shortcut - About

110          120

1.  FEMA **Hurricane Katrina** Information 🔁
    **Hurricane Katrina** news, press releases, disaster declarations, and how to
    get help for victims and evacuees. Also includes state emergency
    management links for evacuations, preparations, shelters, and safety. In
    English and Spanish.
    Category: Hurricane Katrina 2005
    www.fema.gov/press/2005/resources_katrina.shtm - 21k - Cached - More
    from this site - Save

2.  **Hurricane Katrina** - Yahoo! News Full Coverage 🔁
    Provides ongoing, in-depth coverage of **Hurricane Katrina** and the storm's
    aftermath, with articles, audio, video, and photographs.
    Category: Hurricane Katrina 2005
    news.yahoo.com/fc/us/hurricane_katrina - 26k - Cached - More from this
    site - Save

3.  **Hurricane Katrina** Recovery on FirstGov.gov 🔁
    Find out what to do if you are a victim of the 2005 storm, **Hurricane Katrina**,
    how to find missing persons or evacuees, help victims and communities
    devastated by flooding, or locate disaster cleanup and agency resources.
    Category: Hurricane Katrina Relief Efforts
    firstgov.gov/Citizen/.../PublicSafety/Hurricane_Katrina_Recovery.shtml -
    36k - Cached - More from this site - Save

4.  New Orleans Times-Picayune 🔁
    New Orleans' daily newspaper, the Times-Picayune. Chronicling the city's

# Figure 1

Figure 2

Figure 3

Figure 4

Figure 5

Company <u>ABC</u> suffered significant losses <u>last year</u> and <u>it</u> has had to abandon <u>plans</u> to expand into the <u>USA</u>.

COMPANY

LOCATION

isInstanceOf

hasSubcategory

hasSubcategory

ABC

CITY

CONTINENT

locatedIn

isInstanceOf

hasSubcategory

isInstanceOf

EUROPE

PARIS

isInstanceOf

COUNTRY

isInstanceOf

partOf

isInstanceOf

AMERICAS

partOf

isInstanceOf

FRANCE

partOf

USA

Figure 6

GENERATE SEARCH QUERY S700

↓

SUBMIT SEARCH QUERY S705
TO SEARCH ENGINE

↓

S710

RECEIVE QUERY, GENERATE RESULT SET AND
SEARCH METADATA DATABASE TO IDENTIFY NE
ASSOCIATED WITH DOCUMENTS IN RESULT SET

↓

APPLY WEIGHTINGS TO ALL NE
ACCORDING TO THE QUERY
CONTEXT AND FREQUENCY OF S715
OCCURRENCE IN RESULT SET

↓

GENERATE & RETURN S720
A RANKED LIST OF NE

Figure 7

GENERATE SEARCH QUERY S800

SUBMIT SEARCH QUERY
TO SEARCH ENGINE S805

RECEIVE QUERY AND
ESTABLISH CLASSES OF NE
REFERRED TO IN QUERY S810

GENERATE RESULT SET AND SEARCH
METADATA DATABASE TO IDENTIFY NE
IN RESULT HAVING THOSE CLASSES S815

APPLY WEIGHTINGS TO ALL NE BUT
BIAS WEIGHTINGS IN FAVOUR OF NE
IN THOSE CLASSES AND IN QUERY S820

GENERATE & RETURN S825
A RANKED LIST OF NE

Figure 8

GENERATE SEMANTIC QUERY | S900

SUBMIT QUERY
TO SEARCH ENGINE | S905

GENERATE RESULT SET | S910

SEARCH METADATA DATABASE
TO IDENTIFY DOCUMENTS
HAVING THOSE CLASSES | S915

APPLY WEIGHTINGS TO ALL NE BUT
BIAS WEIGHTINGS IN FAVOUR OF NE
IN THOSE CLASSES AND IN QUERY | S920

GENERATE & RETURN
A RANKED LIST OF NE | S925

Figure 9

GENERATE SEMANTIC QUERY  S1000

↓

SUBMIT QUERY
TO SEARCH ENGINE  S1005

↓

RECEIVE QUERY AND SEARCH
METADATA DATABASE TO IDENTIFY
DOCUMENTS HAVING NE FROM QUERY  S1010

↓

COMPARE DOCUMENT CLASSES
WITH USER INTEREST PROFILE  S1015

↓

APPLY WEIGHTINGS TO ALL NE BUT
BIAS WEIGHTINGS IN FAVOUR OF NE
IN QUERY OR IN QUERY CLASSES  S1020

↓

APPLY WEIGHTINGS TO THE NE IN
DEPENDENCE UPON THE DEGREE
OF INTEREST  S1025

↓

GENERATE & RETURN
A RANKED LIST OF NE  S1030

Figure 10

Figure 11

Figure 12

Figure 13

ONTOLOGY

supplies    inSupplyChain

COMPANY

hasSubCategory

hasSubCategory

hasSubCategory    hasSubCategory

TELECOMMS
COMPANY

ENERGY
COMPANY

MANUFACTURING
COMPANY

RETAIL
COMPANY

isInstanceOf

isInstanceOf    isInstanceOf    isInstanceOf

PLC4

PLC2

supplies    supplies    supplies

PLC1    PLC3

inSupplyChain

INSTANCES

Figure 14

Figure 15

EP 1 843 256 A1

**Mozilla Firefox** _ □ X

File   Edit   View   Go   Bookmarks   Tools   Help

file:///S:/wps-and-delivs/wp5-.

GATE Home    GATE internal    SAI Wiki    SEKT docs    Readings    NetFlights    »

HSBC is a bank. Banks are a kind of financial institution. Banks lend to persons and to organisations. HSBC has:

- A market capitalisation of EUR43bn;
- Markets in North America, Europe, Asia and South America;
- 137000 employees

Figure 16

**European Patent Office**

**EUROPEAN SEARCH REPORT**

Application Number

EP 06 25 1870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 460 034 B1 (WICAL KELLY) 1 October 2002 (2002-10-01) * abstract * * column 2, line 41 - column 3, line 15 * * column 4, line 1 - column 5, line 55; figure 1 * * column 7, line 23 - line 34 * * column 15, line 55 - line 63 * ----- | 1-19 | INV. G06F17/30 G06F17/27 |
| A | US 2006/047691 A1 (HUMPHREYS KEVIN W ET AL) 2 March 2006 (2006-03-02) * the whole document * ----- | 1-19 | |
| D,A | KIRYAKOV A ET AL: "Semantic annotation, indexing, and retrieval" WEB SEMANTICS: SCIENCE, SERVICES AND AGENTS ON THE WORLD WIDE WEB, ELSEVIER, vol. 2, no. 1, 1 December 2004 (2004-12-01), pages 49-79, XP004653843 ISSN: 1570-8268 * the whole document * ----- | 1-19 | |
| | | | TECHNICAL FIELDS SEARCHED (IPC) |
| A | US 6 363 378 B1 (CONKLIN JAMES ET AL) 26 March 2002 (2002-03-26) * abstract * * column 2, line 65 - column 3, line 24 * ----- -/-- | 1,13 | G06F |

The present search report has been drawn up for all claims

| Place of search | Date of completion of the search | Examiner |
|---|---|---|
| Berlin | 18 August 2006 | Lechenne-Stiller, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

European Patent Office

| Application Number |
| --- |
| EP 06 25 1870 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | BUDANITSKY A ET AL: "Semantic distance in WordNet: An experimental, application-oriented evaluation of five measures" WORKSHOP ON WORDNET AND OTHER LEXICAL RESOURCES, IN THE NORTH AMERICAN CHAPTER OF THE ASSOCIATION FOR COMPUTATIONAL LINGUISTICS (NAACL-2001), [Online] June 2001 (2001-06), XP002394584 Pittsburgh, PA Retrieved from the Internet: URL:http://citeseer.ist.psu.edu/budanitsky 01semantic.html> [retrieved on 2006-08-11] * the whole document * ----- | 1-19 | |

TECHNICAL FIELDS SEARCHED (IPC)

The present search report has been drawn up for all claims

| Place of search | Date of completion of the search | Examiner |
| --- | --- | --- |
| Berlin | 18 August 2006 | Lechenne-Stiller, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 843 256 A1**

## ANNEX TO THE EUROPEAN SEARCH REPORT
## ON EUROPEAN PATENT APPLICATION NO.

EP 06 25 1870

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2006

| Patent document cited in search report | | Publication date | Patent family member(s) | | Publication date |
|---|---|---|---|---|---|
| US 6460034 | B1 | 01-10-2002 | NONE | | |
| US 2006047691 | A1 | 02-03-2006 | US 2006047500 A1 | | 02-03-2006 |
| | | | US 2006047690 A1 | | 02-03-2006 |
| US 6363378 | B1 | 26-03-2002 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DEAN et al.** OWL Web Ontology Language Reference. *W3C Recommendation,* 10 February 2004, http://www.w3.org/TR/ow1-ref
- **KIRYAKOV et al.** Semantic Annotation, Indexing, and Retrieval. *Elsevier's Journal of Web Semantics,* 2005, vol. 2 (1

- **FRAKES, W.B. ; BAEZA-YATES, R.** Information Retrieval. Prentice-Hall, 1992
- SWRL: A Semantic Web Rule Language Combining OWL and RuleML. *W3C Member Submission,* 21 May 2004, http://www.w3.org/Submission/SWRL